**Europäisches Patentamt**

**European Patent Office**

**Office européen des brevets**

(19)

(11) Numéro de publication : **0 208 572 B1**

(12) **FASCICULE DE BREVET EUROPÉEN**

(45) Date de publication du fascicule du brevet :
26.04.89

(51) Int. Cl.⁴ : **B 60 G 21/06**

(21) Numéro de dépôt : **86401198.6**

(22) Date de dépôt : **04.06.86**

(54) **Modulateur automatique de raideur de roulis.**

(30) Priorité : **11.06.85 FR 8509113**

(43) Date de publication de la demande :
**14.01.87 Bulletin 87/03**

(45) Mention de la délivrance du brevet :
**26.04.89 Bulletin 89/17**

(84) Etats contractants désignés :
**DE GB IT**

(56) Documents cités :
**FR—A— 1 306 133**
**GB—A— 2 080 213**
**US—A— 3 342 503**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Hoekman, Didier**
**64, Square Ronsard**
**F-77350 Le Mee S/Seine (FR)**

(74) Mandataire : **Boivin, Claude**
**9, rue Edouard-Charton**
**F-78000 Versailles (FR)**

Jouve, 18, rue St-Denis, 75001 Paris, France

**Description**

La présente invention concerne un modulateur automatique de raideur de roulis d'un véhicule automobile, propre à coopérer avec une suspension oléopneumatique d'un essieu de ce véhicule (Demande de brevet britannique GB-A-2 080 213).

Une suspension oléopneumatique comprend pour chaque roue, un accumulateur oléopneumatique. Celui-ci est généralement solidaire de la caisse du véhicule et est relié au cylindre d'un vérin également solidaire de la caisse et dans lequel coulisse un piston articulé à un bras de roue, lui-même articulé sur une traverse ou un longeron.

Les deux accumulateurs oléopneumatiques sont reliés hydrauliquement entre eux pour que l'essieu soit équilibré ; ils sont également reliés à un correcteur de hauteur qui intervient pour corriger l'assiette selon la charge de l'essieu.

Lorsqu'un essieu à suspension oléopneumatique est soumis à un pompage, les deux roues de l'essieu étant sollicitées simultanément dans le même sens, le gaz emprisonné dans les deux accumulateurs de l'essieu se comprime et l'essieu est soumis à des oscillations amorties avant de retrouver son équilibre initial.

En revanche, lorsqu'un tel essieu est soumis à une action de roulis, les deux roues de l'essieu sont sollicitées simultanément en sens inverse soit en raison du profil de la chaussée, soit en raison d'une inclinaison de la caisse sous l'effet de la force centrifuge dans un virage. Dans ces conditions, la suspension oléopneumatique ne réagit pas car le liquide chassé d'un accumulateur rejoint l'autre accumulateur sans compression du gaz emprisonné ; il n'y a pas d'action anti-roulis. Aussi, un essieu à suspension oléopneumatique est généralement équipé d'une barre anti-roulis.

La présente invention a pour objet un modulateur oléopneumatique de la raideur du roulis, grâce auquel les accumulateurs oléopneumatiques d'un essieu réagissent en toute circonstance au roulis de sorte que la barre anti-roulis soit moins sollicitée. Le modulateur automatique de raideur de roulis selon l'invention, propre à coopérer avec la suspension oléopneumatique d'un essieu de véhicule automobile comprenant pour chaque roue de l'essieu, un accumulateur oléopneumatique, les deux accumulateurs de l'essieu étant reliés entre eux par un circuit hydraulique, lui-même relié à un correcteur de hauteur, qui comporte des moyens pour obturer le circuit reliant les deux accumulateurs, ces moyens étant sensibles au débit de fluide dans le circuit hydraulique de liaison, caractérisé en ce que les moyens pour obturer le circuit reliant les deux accumulateurs se composent d'une bille évoluant dans une chambre hydraulique interposée dans le circuit de liaison et coopérant avec des sièges usinés aux extrémités de deux conduits coaxiaux reliés respectivement aux accumulateurs, lesdites extrémités des conduits débouchant dans la chambre hydraulique et en ce que le modulateur comporte en outre des moyens pour verrouiller en position ouverte lesdits moyens d'obturation, en cas de débit de fluide en provenance du correcteur de hauteur.

D'autres caractéristiques de l'invention apparaîtront au cours de la description suivante d'un exemple de modulateur automatique de raideur de roulis donné, à titre non limitatif à l'aide des Figures qui représentent :

La Figure 1 : le modulateur quand les accumulateurs sont alimentés par le correcteur de hauteur ;

La Figure 2 : le modulateur lorsque l'essieu est sollicité par une de ses roues et,

Les Figures 3, 4 et 5 : une vue en coupe suivant les trois plans respectivement de la navette que comprend le modulateur suivant l'invention.

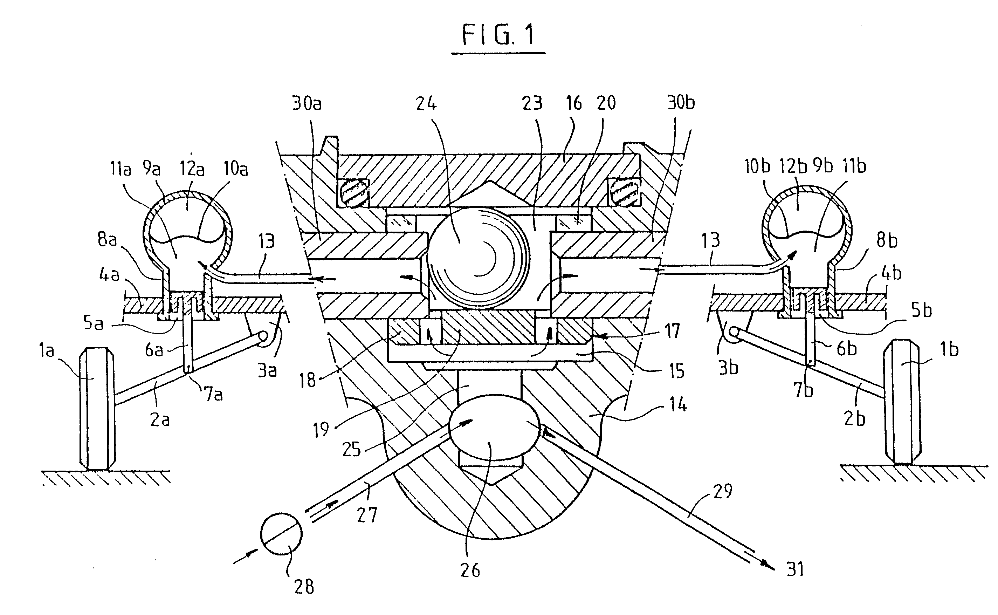

On se reporte à la Figure 1 qui représente un modulateur suivant l'invention quand les accumulateurs sont alimentés par le correcteur de hauteur ayant pour rôle de rétablir l'assiette du véhicule.

Sur cette Figure on a représenté un essieu comprenant deux roues 1a et 1b dont chacune est reliée par un bras 2a ou 2b articulé en 3a ou 3b à une traverse ou un longeron 4a ou 4b. La suspension de l'essieu se compose de deux vérins 5a et 5b dont les pistons 6a et 6b sont articulés en 7a et 7b aux bras 2a et 2b et dont les cylindres 8a et 8b sont fixés ou articulés aux traverses ou longerons 4a et 4b. Les vérins 5a et 5b sont mis en liaison hydraulique, par l'intermédiaire d'amortisseurs non représentés, avec des accumulateurs oléopneumatiques 9a et 9b dont les membranes 10a et 10b séparent les chambres à liquide 11a et 11b des chambres à gaz 12a et 12b. Un circuit hydraulique (13) relie les chambres 11a et 11b afin que la même pression règne, à l'équilibre, dans les deux accumulateurs 9a et 9b.

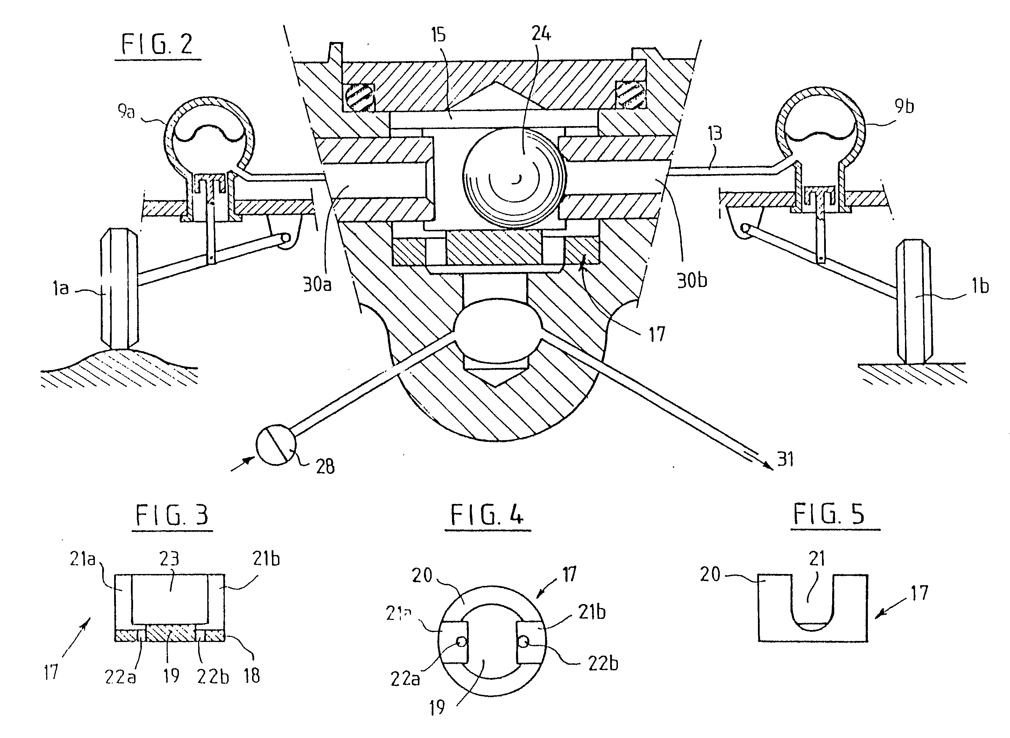

Le modulateur de raideur proprement dit suivant l'invention est constitué par un corps 14 contenant une chambre cylindrique 15 qui est recouverte de façon étanche par un chapeau 16. La chambre 15 contient une navette 17 formée par un élément tubulaire borgne dont le fond 18 admet une surépaisseur centrale 19 et dont la paroi latérale 20 comporte deux encoches en forme de U, diamétralement opposées 21a et 21b visibles aux Figures 3, 4 et 5. Le fond 18 de la navette 17 est percé de deux trous 22a et 22b diamétralement opposés, situés dans le même plan diamétral que les encoches 21a et 21b et tangentant la surépaisseur 19. La navette 17 de plus possède une liberté de mouvement vertical à l'intérieur de la chambre 15.

Deux conduits coaxiaux 30a et 30b emmanchés transversalement dans le corps 14 débouchent à l'intérieur de la navette 17 dans une chambre 23 qui y est ménagée, en passant à travers les encoches 21a et 21b. Ces deux conduits 30a et 30b sont interposés sur le conduit 13 qui fait communiquer les chambres 11a et 11b des accu-

mulateurs 9a et 9b.

Les extrémités des conduits 30a et 30b qui débouchent dans la chambre 23 sont usinés pour servir de siège à une bille 24 qui peut se déplacer dans la chambre 23 de la navette 17 tout en reposant sur la surépaisseur 19 du fond de cette navette.

L'effet d'obturation du circuit reliant les deux accumulateurs est ainsi obtenu par le déplacement de la bille, lorsque la navette se trouve en position basse comme le montre la Figure 2 ; dans ce cas le centre de la bille 24 se trouve sur l'axe commun des conduits 30a et 30b.

La chambre 15 cylindrique communique par un passage 25 en forme de puits avec une chambre 26 dans laquelle débouche un premier conduit 27 venant du correcteur de hauteur 28 et un deuxième conduit 29 relié au circuit de freinage 31 afin, comme cela est bien connu, que la pression du freinage soit proportionnelle à la charge de l'essieu.

Lorsque le correcteur de hauteur 28 est coupé (Figure 2), la bille 24, la navette 17 étant en position basse, peut venir obturer l'un des deux conduits 30a, 30b, suivant le débit qu'une sollicitation en roulis engendre dans le conduit 13 ; la bille se déplace dans un sens déterminé et tend à s'appliquer contre un des sièges usinés aux extrémités des conduits 30a et 30b à l'intérieur de la chambre 23. Les deux accumulateurs 9a et 9b sont ainsi rendus indépendants par l'intervention de la bille 24 qui coupe la liaison entre les deux parties du conduit 13 et les accumulateurs réagissent alors élastiquement à la sollicitation en roulis.

Lorsque le correcteur de hauteur 28 est en fonctionnement (Figure 1) et que le réservoir haute pression, non représenté sur la Figure, débite dans la suspension de l'essieu, la navette 17 s'élève à l'intérieur de la chambre 15 et soulève la bille 24, élevant par là même son centre qui ne se trouve alors pas sur l'axe commun des conduits 30a et 30b. Aucun des deux conduits 30a et 30b ne peut être obturé et l'alimentation hydraulique de l'essieu est équilibrée.

Si le correcteur de hauteur 28 intervient pour relier la suspension à l'échappement, la navette 17 reste sur le fond de la chambre 15, mais les deux conduits 30a et 30b restent ouverts, car si la bille 24 venait à obturer l'un d'entre eux, il se créerait instantanément un écart de pression dans la chambre 15 qui tendrait à recentrer la bille.

## Revendications

1. Modulateur automatique de raideur de roulis, propre à coopérer avec la suspension oléopneumatique d'un essieu de véhicule automobile comprenant pour chaque roue de l'essieu, un accumulateur oléopneumatique, les deux accumulateurs de l'essieu étant reliés entre eux par un circuit hydraulique, lui-même relié à un correcteur de hauteur, qui comporte des moyens (23-24) pour obturer le circuit (13) reliant les deux accumulateurs (9a-9b), ces moyens étant sensibles au débit de fluide dans le circuit hydraulique de liaison, caractérisé en ce que les moyens pour obturer le circuit reliant les deux accumulateurs se composent d'une bille (24) évoluant dans une chambre hydraulique (23) interposée dans le circuit de liaison (13) et coopérant avec des sièges usinés aux extrémités de deux conduits (30a-30b) coaxiaux reliés respectivement aux accumulateurs (9a-9b), lesdites extrémités des conduits débouchant dans la chambre hydraulique (23) et en ce que le modulateur comporte en outre des moyens pour verrouiller en position ouverte lesdits moyens d'obturation (24), en cas de débit de fluide en provenance du correcteur de hauteur (28).

2. Modulateur automatique de raideur de roulis selon la revendication 1, caractérisé en ce que les moyens de verrouillage des moyens d'obturation comprennent une navette (17) mobile verticalement dans une chambre cylindrique (15), entraînant dans son déplacement vertical la bille mobile (24) dont le centre se soulève par rapport à l'axe commun aux deux conduits (30a-30b) débouchant dans la chambre hydraulique (23) interne à la navette.

3. Modulateur automatique de raideur de roulis selon la revendication 2, caractérisé en ce que la navette (17) se compose d'un élément tubulaire borgne comprenant un fond (18) muni d'une surépaisseur (19) sur laquelle repose la bille (24), et des perçages (22a-22b) extérieurs à la surépaisseur, ménagés dans le fond (18) et une paroi latérale (20) munie de deux encoches (21a-21b) en forme de U, à travers lesquelles passent les deux conduits (30a-30b) reliés aux accumulateurs (9a-9b).

4. Modulateur automatique de raideur de roulis selon la revendication 2 ou 3, caractérisé en ce que la chambre (15) cylindrique communique par un passage (25) en forme de puits avec une chambre hydraulique (26) dans laquelle débouche d'une part un premier conduit (27) connecté au correcteur de hauteur (28) et d'autre part un deuxième conduit (29) relié au conduit de freinage (31).

5. Modulateur automatique de raideur de roulis selon l'une quelconque des revendications 1 à 4, caractérisé en ce qu'il comprend dans un corps (14), une chambre cylindrique (15) recouverte par un chapeau (16), une navette (17) mobile verticalement dans la chambre cylindrique (15) et délimitant une chambre hydraulique (23) dans laquelle débouchent deux conduits (30a-30b) connectés respectivement aux accumulateurs oléopneumatiques (9a-9b) et dont les extrémités internes à la chambre (23) sont usinées pour servir de siège à une bille (24) d'obturation reposant sur une surépaisseur (19) du fond (18) de la navette (17), ladite chambre cylindrique (15) communiquant de plus, par un passage (25) avec une chambre (26) communiquant d'une part avec le correcteur de hauteur (28) et d'autre part avec le circuit de freinage (31).

## Claims

1. Automatic roll stiffness modulator adapted for cooperating with the oleopneumatic suspension of a motor vehicle axle, comprising an oleopneumatic accumulator for each wheel of the axle, the two accumulators of the axle being connected together by a hydraulic circuit, itself connected to a height corrector which comprises means (23-24) for closing the circuit (13) connecting the two accumulators (9a-9b) together, these means being responsive to the flow of fluid in the connecting hydraulic circuit, characterized in that the means for closing the circuit connecting the two accumulators together is formed of a ball (24) moving in a hydraulic chamber (23) inserted in the connection circuit (13) and cooperating with seats machined at the ends of two coaxial ducts (30a and 30b) connected respectively to the accumulators (9a-9b), said ends of the ducts opening into the hydraulic chamber (23) and in that the modulator further comprises means for locking said closure means (24) in an open position, should there be a flow of fluid from the height corrector (28).

2. Automatic roll stiffness modulator according to claim 1, characterized in that the means for locking the closure means comprise a shuttle (17) vertically movable in a cylindrical chamber (15), causing, in its vertical movement, the mobile ball (24) to move whose centre is raised with respect to the axis common to the two ducts (30a and 30b) opening into the hydraulic chamber (23) inside the shuttle.

3. Automatic roll stiffness modulator according to claim 2, characterized in that the shuttle (17) is formed of a blind tubular element comprising a bottom (18) with an extra thick portion (19) on which the ball (24) rests and bores (22a-22b) external to the extra thick portion formed in the bottom (18) and a side wall (20) with two U shaped notches (21a-21b) through which pass the two ducts (30a and 30b) connected to the accumulators (9a-9b).

4. Automatic roll stiffness modulator according to claim 2 or 3, characterized in that the cylindrical chamber (15) communicates through a passage in the form of a well (25) with a hydraulic circuit chamber (26) in which open, one the one hand, a first duct (27) connected to the height corrector (28) and, on the other hand, a second duct (29) connected to the braking duct (31).

5. Automatic roll stiffness modulator according to any one of claims 1 to 4, characterized in that it comprises, in a body 14, a cylindrical chamber (15) covered by a cap (16), a shuttle (17) movable vertically in the cylindrical chamber (15) and defining a hydraulic circuit chamber (23) in which open two ducts (30a and 30b) connected respectively to the oleopneumatic accumulators (9a-9b) and whose ends inside chamber (23) are machined to serve as seats for a closure ball (24) resting on an extra thick portion (19) of the bottom (18) of the shuttle (17), said cylindrical chamber (15) further communicating, through a passage (25) with a chamber (26) communicating, on the one hand, with the height corrector (28) and, on the other hand, with the braking circuit (31).

## Patentansprüche

1. Automatischer Wanksteifigkeitsmodulator, geeignet zum Zusammenwirken mit der ölpneumatischen Aufhängung einer Kraftfahrzeugachse, der einen ölpneumatischen Speicher für jedes Rad der Achse aufweist, wobei die beiden Speicher der Achse über einen Hydraulikkreis miteinander verbunden sind, der selbst mit einem Höhenregler verbunden ist, und der Mittel (23-24) zum Sperren des die beiden Speicher (9a-9b) verbindenden Kreises (13) besitzt, wobei diese Mittel empfindlich auf den Fluiddurchsatz im hydraulischen Verbindungskreis reagieren, dadurch gekennzeichnet, daß die Mittel zum Sperren des die beiden Speicher verbindenden Kreises sich zusammensetzen aus einer Kugel (24), die sich in einer in den Verbindungskreis (13) eingeschalteten Hydraulikkammer (23) bewegt und die mit bearbeiteten Sitzen an den Enden zweier koaxial angeordneter Rohrleitungen (30a-30b) zusammenwirkt, welche jeweils mit den Speichern (9a-9b) verbunden sind, wobei besagte Enden der Rohrleitungen in die Hydraulikkammer (23) einmünden und daß der Modulator außerdem Mittel aufweist zum Verriegeln besagter Mittel (24) zum Sperren in der Offenstellung, wenn ein vom Höhenregler (28) ausgehender Fluiddurchsatz auftritt.

2. Automatischer Wanksteifigkeitsmodulator nach Anspruch 1, dadurch gekennzeichnet, daß die Mittel zur Verriegelung der Mittel zum Sperren einen Greifer (17) aufweisen, welcher in einer zylindrischen Kammer (15) bewegbar ist und bei seiner vertikalen Verschiebung die bewegliche Kugel (24) mitnimmt, deren Mittelpunkt sich in Bezug auf die gemeinsame Achse der beiden Rohrleitungen (30a-30b), welche an der Innenseite des Greifers in die Hydraulikkammer (23) einmünden, anhebt.

3. Automatischer Wanksteifigkeitsmodulator nach Anspruch 2, dadurch gekennzeichnet, daß der Greifer (17) sich zusammensetzt aus einem rohrförmigen Blindelement mit einem Boden (18), welcher mit einer Verdickung (19) versehen ist, auf der die Kugel (24) aufsitzt, sowie mit Bohrungen (22a-22b), die außerhalb der Verdickung im Boden (18) angeordnet sind und einer Seitenwand (20), die mit U-förmigen Aussparungen (21a-21b) versehen ist, durch welche die beiden mit den Speichern (9a-9b) verbundenen Rohrleitungen (30a-30b) hindurchgeführt sind.

4. Automatischer Wanksteifigkeitsmodulator nach Anspruch 2 oder 3, dadurch gekennzeichnet, daß die zylindrische Kammer (15) über einen schachtförmigen Durchlaß (25) mit einer Hydraulikkammer (26) verbunden ist, in welche einerseits eine erste, mit dem Höhenregler (28) verbundene Leitung (27) und andererseits eine zweite, mit der Bremsleitung (31) verbundene Leitung (29) einmündet.

5. Automatischer Wanksteifigkeitsmodulator nach einem der Ansprüche 1 bis 4, dadurch gekennzeichnet, daß er in einem Grundkörper (14) eine zylindrische Kammer (15) aufweist, die mit einem Deckel (16) abgedeckt ist, sowie einen Greifer (17), der in der zylindrischen Kammer (15) in vertikaler Richtung bewegbar ist und eine Hydraulikkammer (23) abgrenzt, in welche zwei Rohrleitungen (30a-30b) einmünden, die jeweils mit ölpneumatischen Speichern (9a-9b) verbunden sind und deren innerhalb der Kammer (23) angeordnete Endenbearbeitet sind, um als Sitz einer Absperrkugel (24) zu dienen, welche auf einer Verdickung (19) des Bodens (18) des Greifers (17) aufsitzt, wobei besagte zylindrische Kammer (15) weiterhin über einen Durchlaß (25) mit einer Kammer (26) verbunden ist, die einerseits mit dem Höhenregler (28) und andererseits mit dem Bremskreis (31) verbunden ist.

FIG.1

FIG. 2

FIG. 3

FIG. 4

FIG. 5

EP 0 208 572 B1